# EUROPEAN PATENT APPLICATION

(11) **EP 4 850 558 A1**
(43) Date of publication of application: **09.12.2026**
(21) Application number: 25893364.7
(22) Date of filing: 03.01.2025
(51) Int. Cl.: A43B 7/08

(54) **VENTILATION DEVICE APPLIED TO SHOE SOLE AND PREPARATION METHOD THEREFOR, AND SHOE SOLE AND SHOE**

(30) Priority: 25.11.2024 CN 202411697557
(71) Applicant: Maotai (Fujian) New Material Technology Co., Ltd, Quanzhou, Fujian 362218 (CN)
(72) Inventor: ZHENG, Rongda, Quanzhou, Fujian 362218 (CN); ZHUANG, Weizhi, Quanzhou, Fujian 362218 (CN); DING, Sien, Quanzhou, Fujian 362218 (CN); DING, Xinlan, Quanzhou, Fujian 362218 (CN); DING, Junjie, Quanzhou, Fujian 362218 (CN); DING, Jiayi, Quanzhou, Fujian 362218 (CN); DING, Weidong, Quanzhou, Fujian 362218 (CN)
(74) Representative: Cleanthous, Marinos
(86) International application number: PCT/CN2025/070495
(87) International publication number: WO 2026/107958

(57) **Abstract**

The present application relates to a breathable device applied to a sole and a preparation method thereof, a sole and a shoe, where the breathable device includes a pad and a waterproof breathable cloth covering a surface of the pad, where the surface of the pad is provided with a plurality of convex portions, inside the convex portion is provided with a plurality of air holes, a peripheral edge of the waterproof breathable cloth is provided with a plurality of circular holes, a washer is stacked on the peripheral edge of the waterproof breathable cloth, and the washer is integrally formed with the pad by passing through the circular holes. In the present application, mold A is used to manufacture a semi-finished inner ring component, and then the inner ring component is put into a lower mold of mold B. TPU material is injected into mold B.

## Description

### TECHNICAL FIELD

The present application relates to the technical field of breathable shoes, and in particular to a breathable device applied to a sole and a preparation method thereof, a sole, and a shoe.

### BACKGROUND

A shoe includes an upper and a sole, which are used to protect the foot from being stabbed by sharp objects when walking on the road. Traditional shoes rely on the upper to realize breathability. Their soles are made of heat-insulating materials and are non-breathable. Consequently, foot sweat cannot easily evaporate, which promotes the propagation of fungi and mold, induces tinea pedis, and impairs the foot health of the wearer.

To enhance breathability, some shoes available on the market are designed with ventilation holes on the side of the sole to draw in or expel air through the sole, thereby improving the efficiency of air circulation between the shoe and the outside. For example, a Chinese utility model patent with reference to the authorization announcement number CN219939844U discloses a sole with good breathability and a shoe including the sole, including a sole body, a shoe groove with an upper opening is provided on the sole body, a supporting edge and a supporting crossbeam are provided on a bottom wall of the shoe groove, an outer wall of the supporting edge is connected to an inner wall of the shoe groove, and a plurality of air holes penetrating the supporting edge are further provided on the sole body. The insole is a breathable insole, which can play a certain waterproof effect while ensuring good breathability of the insole. However, this type of shoe is poor in waterproof and dustproof performance. After walking on a road with a lot of dust on the bottom for a period of time, small air holes are easily blocked by accumulated dust, which greatly reduces breathability of the sole. In addition, water on the road surface can easily enter the sole from the air holes, resulting in poor waterproof effect and poor wearing experience.

### SUMMARY

The present application provides a breathable device applied to a sole and a preparation method thereof, a sole and a shoe, so as to solve the problems that air holes of the preceding shoes are easily blocked by dust, resulting in breathability, water easily enters the shoe from the air holes to form accumulated water, and the waterproof effect is poor.

The technical solution adopted by the present application is as follows:

A breathable device applied to a sole is provided, including a pad and a waterproof breathable cloth covering a surface of the pad, where the surface of the pad is provided with a plurality of convex portions, inside the convex portion is provided with a plurality of air holes, a peripheral edge of the waterproof breathable cloth is provided with a plurality of circular holes, a washer is stacked on the peripheral edge of the waterproof breathable cloth, and the washer is integrally formed with the pad by passing through the circular holes.

Further, interconnected grooves are formed among the preceding plurality of convex portions, and the grooves are configured for secondary injection molding and bonding the waterproof breathable cloth.

Further, the bottom of the preceding groove is provided with a plurality of protrusions, and the protrusions are configured to top-connect the waterproof breathable cloth.

Further, the preceding pad and washer are integrally molded by injection molding of thermoplastic polyurethane (TPU) material.

Further, the preceding pad is 1 mm to 3 mm thick.

A preparation method of the breathable device applied to a sole is provided, including the following four steps.
1) Put the TPU raw material into a mold cavity of a lower mold of mold A, close an upper mold of mold A, heat and mold, cool and open the mold to obtain a semi-finished inner ring component of the breathable device, where groove structures are presented among preceding convex portions and convex portions, and all the grooves are interconnected in a grid shape.
2) Take a piece of waterproof breathable cloth and punch holes in the waterproof breathable cloth, where the circular holes of the waterproof cloth are arranged along a peripheral edge of the inner ring component to form a circle.
3) Place the inner ring component obtained in the previous step in a mold cavity of a lower mold of mold B, leaving a spacing between the inner ring component and a side wall around the mold cavity; hang the waterproof breathable cloth on an upper mold of mold B, close the upper mold of mold B, and inject TPU material into the mold cavity of mold B, where the inner ring component is integrally formed with the waterproof breathable cloth by bonding with the newly injected TPU material.
4) Cool and open the mold, cut excess waterproof breathable cloth along an edge of the breathable device to make the breathable device.

Further, the bottom of an upper mold of the preceding mold B is provided with an annular slot aligned with a peripheral edge of a lower mold, and the newly injected TPU material can flow into the annular slot passing through the circular holes of the preceding waterproof breathable cloth.

Further, mold cavities of the lower mold of the preceding mold A and the lower mold of the preceding mold B are provided with mutually corresponding positioning columns, and the preceding inner ring component is provided with a positioning hole matched with the positioning column.

A sole is provided, including a midsole, where a recess is provided on an upper surface of the midsole, the preceding breathable device applied to a sole is provided in the recess, and through holes corresponding one-to-one to the preceding air holes are formed through the bottom of the recess.

Further, the bottom of the preceding midsole is bonded with an outsole.

A waterproof breathable shoe is provided, including an upper and the preceding sole equipped with a breathable device, and the upper is connected to an upper end of the sole.

As can be seen from the preceding description of the present application, compared with the prior art, the present application has the following advantages:
1. In the present application, mold A is used to manufacture a semi-finished inner ring component, and then the inner ring component is put into a lower mold of mold B. TPU material is injected into mold B. The TPU material flows into a groove of the inner ring component and a peripheral edge of a mold cavity of the lower mold of mold B. Moreover, the TPU material penetrates circular holes of the waterproof breathable cloth and flows into an annular slot of an upper mold of mold B, so that the inner ring component and the waterproof breathable cloth are bonded and formed as a whole with the secondary injected TPU material cloth. The TPU material clamps the peripheral edge of the waterproof breathable cloth up and down, the waterproof breathable cloth is firmly connected to the inner ring component, and the peripheral edge is not easy to delaminate.
2. A protrusion is reserved in the groove of the inner ring component of the present application, and the protrusion is connected to the waterproof breathable cloth on top, so that the waterproof breathable cloth remains flat and not easy to sink into the groove. The groove remains unobstructed, which facilitates the uniform injection of TPU material into the groove.
3. The inner ring component of the present application is provided with a plurality of convex portions, and the convex portion is provided with an anti-puncture inclined plate. Air holes are formed among the inclined plates. With a large diameter, the air hole is not easily blocked by dust and has good breathability. The waterproof breathable cloth covers the surface of the convex portion, and the waterproof breathable cloth is not easy to block the air hole. The inner ring component has excellent waterproof and breathable effects.
4. The breathable device of the present application is equipped on the sole, and the sole is provided with a recess adapted to the breathable device. A plurality of air holes are arranged at the bottom of the recess, and an aperture of the air hole is large, breathability of the sole is optimized, and the waterproof breathable effect is good.
5. The convex portion of the present application is provided with parallel inclined plates, and strip-shaped air holes are formed among the inclined plates. The inclined plates have an anti-puncture function to protect soles from being stabbed by sharp objects on the bottom surface. The shoes are safer to wear and walk, and the structural design is reasonable.

### BRIEF DESCRIPTION OF THE DRAWINGS

FIG. 1 is a diagram illustrating structures of mold A and its lower mold of the present application.
FIG. 2 is a diagram illustrating a structure of mold B of the present application.
FIG. 3 is a diagram illustrating a structure of a lower mold of mold B of the present application.
FIG. 4 is a diagram illustrating a structure of waterproof breathable cloth of the present application.
FIG. 5 is a diagram illustrating a structure of an inner ring component of the present application.
FIG. 6 is a diagram illustrating a structure of a pad of the present application.
FIG. 7 is a diagram illustrating a structure of pad and waterproof breathable cloth of the present application.
FIG. 8 is a diagram illustrating a structure of a midsole of the present application, without a breathable device equipped.
FIG. 9 is a diagram illustrating a structure of a midsole of the present application, with a breathable device equipped.
FIG. 10 is a cross-sectional diagram illustrating a structure of a midsole of the present application, with a breathable device equipped.
FIG. 11 is a bottom schematic structural view of a sole of the present application.

### DETAILED DESCRIPTION

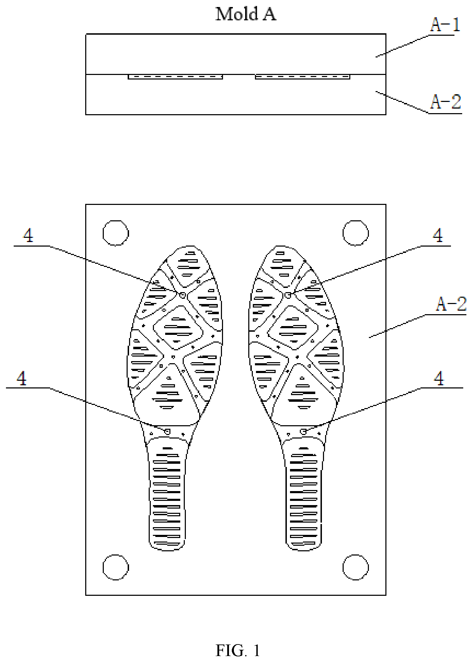

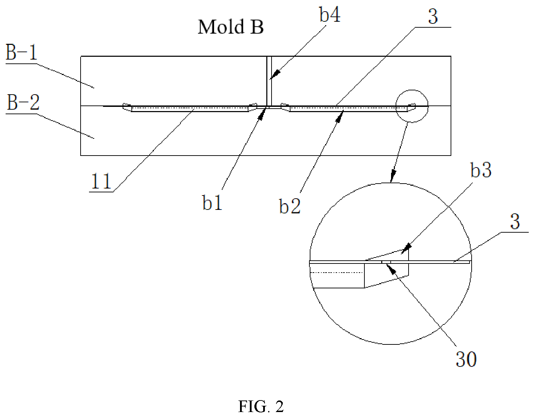

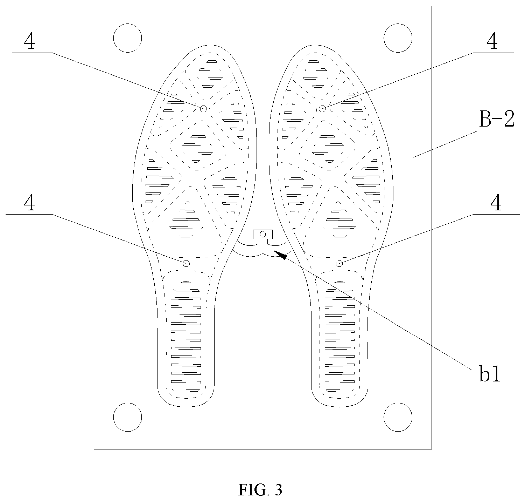

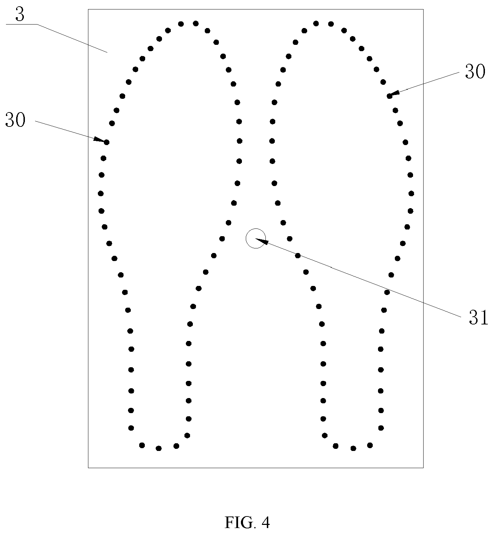

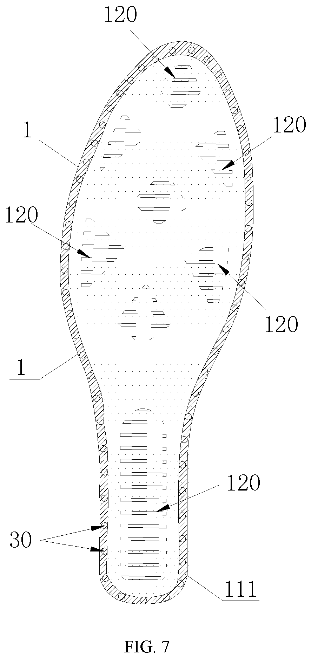

Referring to FIG. 1 to FIG. 7, a breathable device applied to a sole is provided, including a pad 1 and a waterproof breathable cloth 3 covering a surface of the pad 1, where the surface of the pad 1 is provided with a plurality of convex portions 12, inside the convex portion 12 is provided with a plurality of air holes 120, a peripheral edge of the waterproof breathable cloth 3 is provided with a plurality of circular holes 30, a washer 111 is stacked on the peripheral edge of the waterproof breathable cloth 3, and the washer 111 is integrally formed with the pad 1 by passing through the circular holes 30.

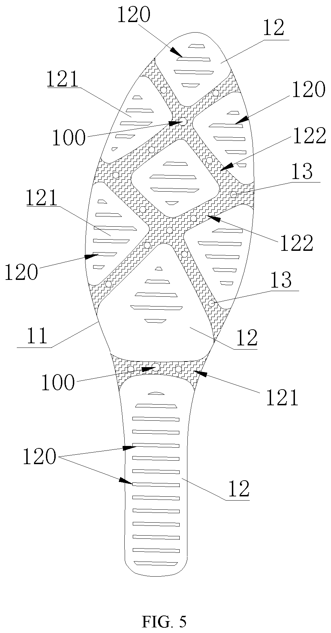

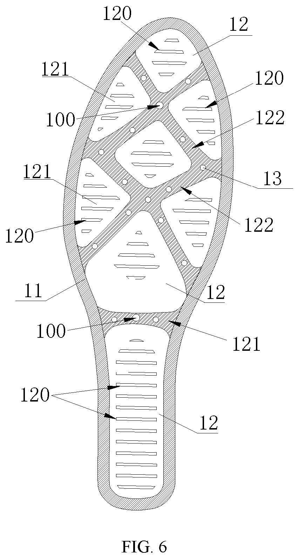

Referring to FIG. 5 and FIG. 6, interconnected grooves 122 are formed among the preceding plurality of convex portions 12, and the grooves 122 are configured for secondary injection molding and bonding the waterproof breathable cloth 3.

Referring to FIG. 5, the bottom of the preceding groove 122 is provided with a plurality of protrusions 13, and the protrusions 13 are configured to top-connect the waterproof breathable cloth 3.

The preceding pad 1 and washer 111 are integrally molded by injection molding of TPU material, and the washer 111 and the pad 1 clamp an edge of the waterproof breathable cloth 3 from up and down.

The preceding pad 1 is 1 mm to 3 mm thick, and preferably the pad 1 is 2 mm thick.

A preparation method of the breathable device applied to a sole is provided, including the following four steps.
1) Put the TPU raw material into a mold cavity of a lower mold A-2 of mold A, close an upper mold A-1 of mold A, heat and mold, cool and open the mold to obtain a semi-finished inner ring component 11 of the breathable device, where groove 122 structures are presented among preceding convex portions 12 and convex portions 12, and all the grooves 122 are interconnected in a grid shape.
2) Take a piece of waterproof breathable cloth 3 and punch holes in the waterproof breathable cloth 3, where the circular holes 30 of the waterproof cloth are arranged along a peripheral edge of the inner ring component 11 to form a circle.
3) Place the inner ring component 11 obtained in the previous step in a mold cavity of a lower mold B-2 of mold B, leaving a spacing between the inner ring component 11 and a side wall around the mold cavity; hang the waterproof breathable cloth 3 on an upper mold B-1 of mold B, close the upper mold B-1 of mold B, where the upper mold B-1 is provided with a feed hole b4 connected to injection molding equipment, and the waterproof breathable cloth 3 is provided with a hole 31 aligned with the feed hole b4, and inject TPU material into the mold cavity b2 of mold B, where the TPU material flows into the mold cavity b2 of mold B along a guide hole b1 through the feed hole b4, and the inner ring component 11 is integrally formed with the waterproof breathable cloth 3 by bonding with the newly injected TPU material.
4) Cool and open the mold, cut excess waterproof breathable cloth 3 along an edge of the breathable device to make the breathable device.

The bottom of an upper mold of the preceding mold B is provided with an annular slot b3 aligned with a peripheral edge of a lower mold, and the newly injected TPU material can flow into the annular slot b3 passing through the circular holes 30 of the preceding waterproof breathable cloth 3.

Mold cavities of the lower mold of the preceding mold A and the lower mold of the preceding mold B are provided with mutually corresponding positioning columns 4, and the preceding inner ring component 11 is provided with a positioning hole 100 matched with the positioning column 4.

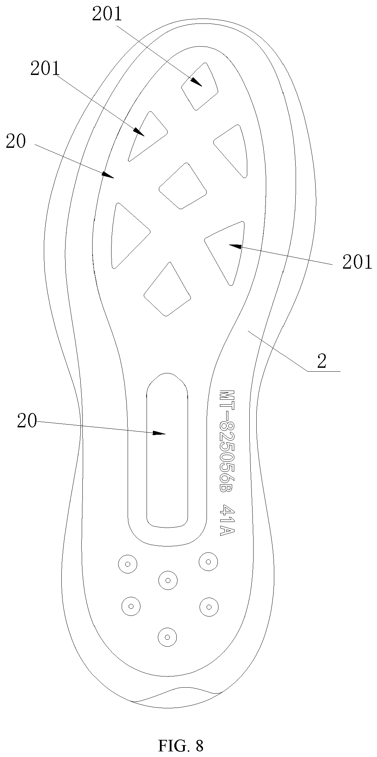

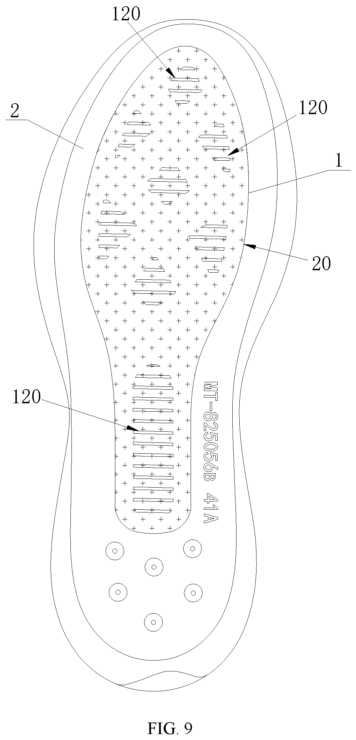

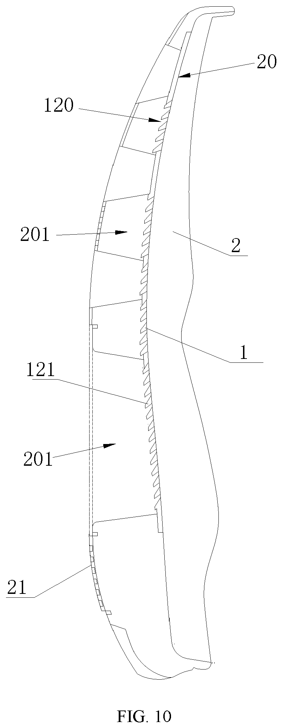

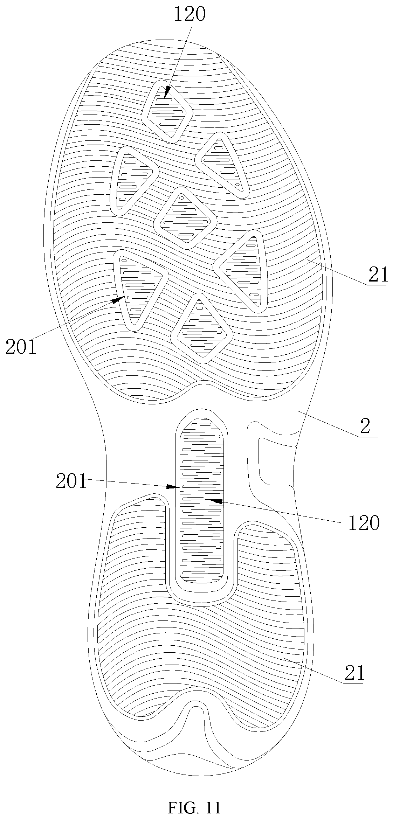

Referring to FIG. 8 to FIG. 11, a sole is provided, including a midsole 2, where a recess 20 is provided on an upper surface of the midsole, the preceding breathable device applied to a sole is provided in the recess 20, through holes 201 corresponding one-to-one to the preceding air holes 120 are formed through the bottom of the recess 20, and the midsole 2 is connected to the outside by means of the through holes 201.

The bottom of the preceding midsole is bonded with an outsole 21, and the bottom surface of the outsole 21 is provided with an anti-slip pattern.

A waterproof breathable shoe is provided, including an upper and the preceding sole equipped with a breathable device, and the upper is connected to an upper end of the sole 2.

The preceding is only a specific implementation of the present application, but the design concept of the present application is not limited to this. Any non-substantial modification of the present application using this concept shall be considered an infringement of the scope of protection of the present application.

## Claims

1. A breathable device applied to a sole, comprising a pad and a waterproof breathable cloth covering a surface of the pad, wherein the surface of the pad is provided with a plurality of convex portions, inside the convex portion is provided with a plurality of air holes, a peripheral edge of the waterproof breathable cloth is provided with a plurality of circular holes, a washer is stacked on the peripheral edge of the waterproof breathable cloth, and the washer is integrally formed with the pad by passing through the circular holes.

2. The breathable device applied to a sole according to claim 1, wherein interconnected grooves are formed among the plurality of convex portions, and the grooves are configured for secondary injection molding and bonding the waterproof breathable cloth.

3. The breathable device applied to a sole according to claim 2, wherein the bottom of the groove is provided with a plurality of protrusions, and the protrusions are configured to top-connect the waterproof breathable cloth.

4. The breathable device applied to a sole according to claim 1, wherein the pad and the washer are integrally molded by injection molding of thermoplastic polyurethane material.

5. The breathable device applied to a sole according to claim 1, wherein a plurality of inclined plates are arranged in the convex portion, and the air holes are formed among the inclined plates.

6. The breathable device applied to a sole according to claim 1, wherein the pad is 1 mm to 3 mm thick.

7. A preparation method of the breathable device applied to a sole according to claim 1, comprising the following steps:
1) putting the thermoplastic polyurethane raw material into a mold cavity of a lower mold of mold A, closing an upper mold of mold A, heating and molding, cooling and opening the mold to obtain a semi-finished inner ring component of the breathable device, wherein groove structures are presented among convex portions and convex portions, and all the grooves are interconnected in a grid shape;
2) taking a piece of waterproof breathable cloth and punching holes in the waterproof breathable cloth, where the circular holes of the waterproof cloth are arranged along a peripheral edge of the inner ring component to form a circle.
3) placing the inner ring component obtained in the previous step in a mold cavity of a lower mold of mold B, leaving a spacing between the inner ring component and a side wall around the mold cavity; hanging the waterproof breathable cloth on an upper mold of mold B, closing the upper mold of mold B, and injecting TPU material into the mold cavity of mold B, where the inner ring component is integrally formed with the waterproof breathable cloth by bonding with the newly injected TPU material; and
4) cooling and opening the mold, cutting excess waterproof breathable cloth along an edge of the breathable device to make the breathable device.

8. The preparation method of the breathable device applied to a sole according to claim 7, wherein the bottom of an upper mold of mold B is provided with an annular slot aligned with a peripheral edge of a lower mold, and the newly injected thermoplastic polyurethane material can flow into the annular slot passing through the circular holes of the waterproof breathable cloth.

9. The preparation method of the breathable device applied to a sole according to claim 7, wherein mold cavities of the lower mold of mold A and the lower mold of mold B are provided with mutually corresponding positioning columns, and the inner ring component is provided with a positioning hole matched with the positioning column.

10. A sole, comprising a midsole, wherein a recess is provided on an upper surface of the midsole, the breathable device applied to a sole according to claim 1 is provided in the recess, and through holes corresponding one-to-one to the air holes are formed through the bottom of the recess.

11. The sole according to claim 10, wherein the bottom of the midsole is bonded with an outsole.

12. A waterproof breathable shoe, comprising an upper and a sole equipped with a breathable device according to claim 10, and the upper being connected to an upper end of the sole.
